# EUROPEAN PATENT SPECIFICATION

(11) **EP 3 659 805 B1**
(45) Date of publication and mention of the grant of the patent: **01.11.2023**
(21) Application number: 18209143.9
(22) Date of filing: 29.11.2018
(51) Int. Cl.: B32B 37/24, B05D 1/26, B32B 37/06, B32B 37/20, B32B 38/06, B32B 27/08, B41M 1/30, B41M 5/00, E04F 15/10

(54) **METHOD OF MAKING PLASTIC FLOORING HAVING BACKING**
VERFAHREN ZUR HERSTELLUNG VON KUNSTSTOFFBODENBELAG MIT RÜCKSCHICHT
MÉTHODE DE FABRICATION DE SOLS EN PLASTIQUE DOTÉS D'UNE COUCHE D'ENVERS

(43) Date of publication of application: 03.06.2020
(73) Proprietor: Lu, Ding Yi, Fangqian Town, Jiangsu Province (CN)
(72) Inventor: Lu, Ding Yi, Fangqian Town, Jiangsu Province (CN)
(74) Representative: Cabinet Chaillot

(56) References cited:
- WO-A1-2014/011110
- US-A1- 2014 220 318

## Description

### FIELD OF THE INVENTION

The present invention relates to a method of making a plastic flooring having a backing which avoids using glue to adhere the backing on the plastic flooring, thus obtaining environmental protection.

### BACKGROUND OF THE INVENTION

Conventional plastic flooring contains a substrate, a printing layer, an anti-abrasion layer, and a backing.

However, the backing is adhered in a back surface of the substrate by using glue, thus causing pollution and troublesome fabrication.

US 2014220318 A1 and WO 2014/011110 A1 discloses a method of making a plastic flooring.

The present invention has arisen to mitigate and/or obviate the afore-described disadvantages.

### SUMMARY OF THE INVENTION

The primary aspect of the present invention is to provide a method of making a plastic flooring having a backing according to claim 1 which avoids using glue to adhere the backing on the plastic flooring, thus obtaining environmental protection

Another aspect of the present invention is to provide a method of making plastic flooring having a backing which manufactures the backing in various shapes by using a computer program control of the electric control system.

### BRIEF DESCRIPTION OF THE DRAWINGS

FIG. 1 is a schematic view showing an equipment for the method of making a plastic flooring having a backing according to a preferred 10 embodiment.
FIG. 2 is a schematic view showing a part of the equipment for the method of making the plastic flooring having the backing according to the preferred embodiment.
FIG. 3 is another schematic view showing a part of the equipment of making the plastic flooring having the backing according to the preferred embodiment.
FIG. 4 is a schematic view showing the plastic flooring having the backing according to the preferred embodiment.
FIG. 5 is another schematic view showing the plastic flooring having the backing according to the preferred embodiment.

### DETAILED DESCRIPTION

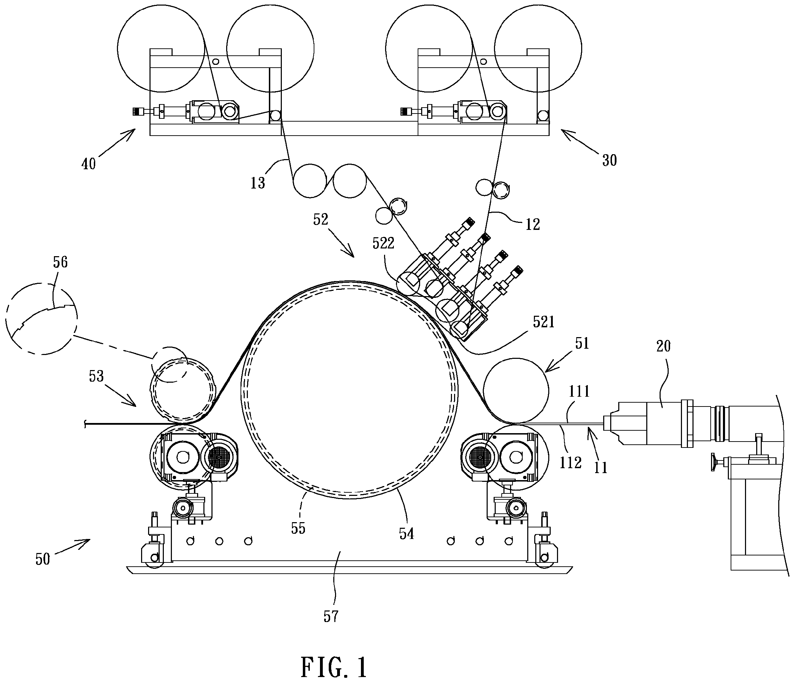

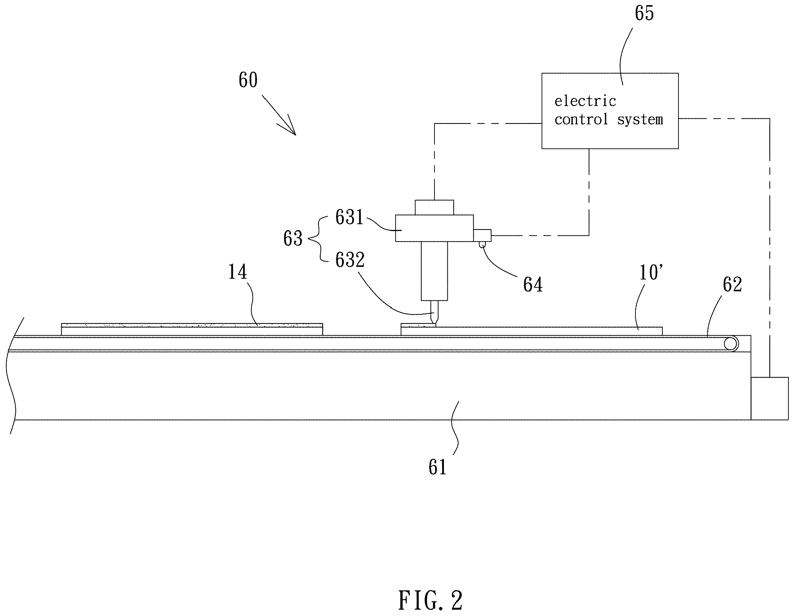

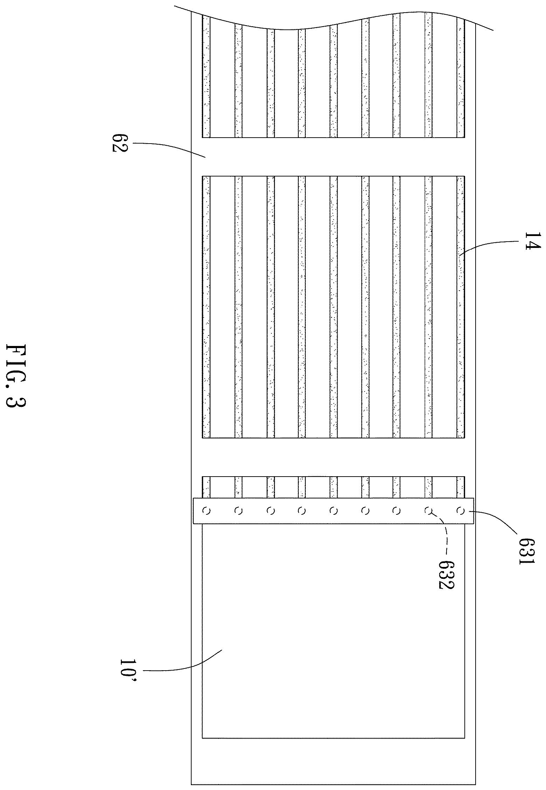

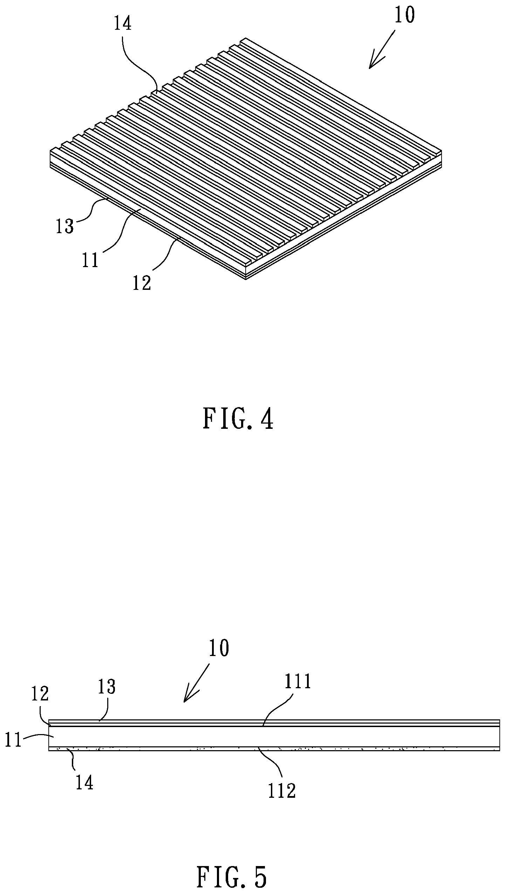

Referring further to FIGS. 1-5, a plastic flooring having a backing comprises: a body 10 including:
a substrate 11 having a top 111 and a bottom 112;
a printing layer 12 having patterns and adhered on the top 111 of the substrate 11 after being rolled with the substrate 11;
an anti-abrasion layer 13 adhered on the printing layer 12 after being rolled with the printing layer 12;
a backing 14 made of polyvinyl chloride (PVC) or polyurethane (PU) and adhered on the bottom 112 of the substrate 11.

The printing layer 12 is adhered on the top 111 of the substrate 11, the anti-abrasion layer 13 is adhered on the printing layer 12, and the backing 14 is adhered on the bottom 112 of the substrate 11 by ways of an extruder 20, a first rolling mechanism 30, a second rolling mechanism 40, a pressing machine 50, and a drop plastic machine 60, so a method of making the plastic flooring further comprises a step of:
(A), producing a semi-finished plastic flooring 10', wherein the substrate 11 is extrusion molded by using the extruder 20 and is transported to the pressing machine 50, the printing layer 12 is delivered to the pressing machine 50 by ways of the first rolling mechanism 30, and the anti-abrasion layer 13 is conveyed to the pressing machine 50 by mean of the second rolling mechanism 40, wherein the substrate 11, the printing layer 12, and the anti-abrasion layer 13 are pressed together by using the pressing machine 50, thus producing the semi-finished plastic flooring 10'.

The pressing machine 50 is a five-roller pressing machine, and the pressing machine 50 includes a pedestal 57 on which a thick rolling set 51, a contact rolling set 52, and a press rolling set 53 are arranged.

The thickness rolling set 51 has two rollers fixed beside a first side of the contact rolling set 52, and a contacting position of the two thickness rollers aligns with an outlet of the extruder 20 so as to limit a thickness of the substrate 11.

The contact rolling set 52 has a contacting roller 54, multiple guiding rollers arranged around the contacting roller 54, a heating unit 55 accommodated in the contacting roller 54, wherein the heating unit 55 has multiple pipes connected with an external device (not shown) so that hot oil flows to the heating unit 55 from the external device via the multiple pipes, by which the substrate 11, the printing layer 12, and the anti-abrasion layer 13 are heated.

The press rolling set 53 is mounted beside a second side of the contact rolling set 52, and the press rolling set 53 has two opposite pressing rollers configured to roll and press the substrate 11, the printing layer 12, and the anti-abrasion layer 13 together, wherein one of the two opposite pressing rollers has embossing section 56 formed thereon so that the anti-abrasion layer 13 has distinguished pressing patterns after pressing the substrate 11, the printing layer 12, and the anti-abrasion layer 13.

The method of making the plastic flooring further comprises a step of:
(B). moving and positioning the semi-finished plastic flooring 10', wherein the semi-finished plastic flooring 10' is cut into multiple sheets in a predetermined size and is put on a predetermined position of the drop plastic machine 60, wherein a back surface of the semi-finished plastic flooring 10' faces upward. The drop plastic machine 60 includes a base 61 on which a delivery mechanism 62 is secured, wherein the delivery mechanism 62 is a delivery belt configured to deliver and hold the semi-finished plastic flooring 10'. The drop plastic machine 60 further includes at least one molding mechanism 63 and at least one sensing element 64 which are located above the base 61 and opposite to the delivery mechanism 62, wherein the at least one molding mechanism 63 has a material collector 631 and at least one material feeder 632 mounted on a bottom of the material collector 631, wherein the material collector 631 accommodates backing material fed by an external supply device, and the material feeder 632 feeds the backing material. The backing material is melt, and the backing material is made of polyvinyl chloride (PVC) or polyurethane (PU). The at least one molding mechanism 63 is movable or is fixed. When the at least one molding mechanism 63 is movable, it has one material feeder 632 which is controlled by an electric control system 65 to move. When the at least one molding mechanism 63 is fixed, it has multiple material feeders 632 which are fixed at a predetermined position. For example, in this embodiment, the at least one molding mechanism 63 is fixed and has the multiple material feeders 632. The sensing element 64 is an infrared radiation (IR) sensor and is disposed on a side of the material collector 631. When the semi-finished plastic flooring 10' is delivered to pass through and located below the sensing element 64, the sensing element 64 transmits a signal to the electric control system 65 so that the electric control system 65 controls the molding mechanism 63 to spray the backing material onto the semi-finished plastic flooring 10'.

The method of making the plastic flooring further comprises a step of:
(C). molding the backing 14, wherein the backing material is spray onto the back surface of the semi-finished plastic flooring 10' by using the molding mechanism 63 of the drop plastic machine 60, and the backing material is adhered on the back surface of the semi-finished plastic flooring 10' after being solidified. When the backing material is sprayed onto the back surface of the semi-finished plastic flooring 10', its distribution shape, position, and size are set by ways of the electric control system 65. For example, the backing material is sprayed onto the back surface of the semi-finished plastic flooring 10' in a sheet shape or multiple spaced strap shape.

Furthermore, the backing material is sprayed onto the semi-finished plastic flooring 10' in a normal temperature and a low pressure, and the semi-finished plastic flooring 10' is put into a heating chamber to be heat at a temperature of 100 °C to 130 °C. Thereafter, the semi-finished plastic flooring 10' is removed from the heating chamber and is cooled in the normal temperature. Alternatively, the backing material is sprayed onto the semi-finished plastic flooring 10' by using the at least one molding mechanism 63 in a high pressure and a high temperature, and the semi-finished plastic flooring 10' is cooled in the normal temperature. In another embodiment, the backing 14 is molded in a roll coating manner.

The method of making the plastic flooring further comprises a step of:
(D). cutting, wherein the semi-finished plastic flooring 10' having the backing 14 is removed and is cut into a desired size, thus producing the body 10.

Thereby, the backing 14 is adhered on the bottom of the body 10 in a spring manner, thus avoid glue coating and obtaining environmental protection. The backing 14 is molded by using a computer program control of the electric control system 65 in various shapes.

## Claims

1. A method of making a plastic flooring comprising steps of:
(A) providing and delivering a substrate (11) to a pressing machine (50);
(B) providing and delivering a printing layer (12) to the pressing machine (50);
(C) providing and delivering an anti-abrasion layer (13) to the pressing machine (50);
(D) extrusion molding the substrate (11), wherein the substrate (11) is extrusion molded by an extruder (20), and the substrate (11) is transported onto the pressing machine (50); an end of the printing layer (12) is fixed on a first rolling mechanism (30), and the printing layer (12) is delivered onto the pressing machine (50); an end of the anti-abrasion layer (13) is mounted on a second rolling mechanism (40), and the anti-abrasion layer (13) is delivered to the pressing machine (50);
wherein the pressing machine (50) includes a pedestal (57) on which a thick rolling set (51), a contact rolling set (52), and a press rolling set (53) are arranged; the substrate (11) is transported to the thick rolling set (51) and a contacting roller (54) of the contact rolling set (52), the printing layer (12) is guided to the contacting roller (54) by a first guiding roller (521) of the contact rolling set (52) and to contact with a top (111) of the substrate (11);
wherein the anti-abrasion layer (13) is guided to the contacting roller (54) by one of the multiple guiding rollers arranged around the contacting roller (54) of the contact rolling set (52) and to contact with the printing layer (12);
wherein after the substrate (11), the printing layer (12), and the anti-abrasion layer (13) contact, they are pressed together by the pressing machine (50) so as to form a semi-finished plastic flooring (10');
(F) moving and positioning the semi-finished plastic flooring (10'), and facing a bottom (112) of the substrate (11) upward;
(G) setting a distribution shape, a position, and a size of a backing material being sprayed by ways of an electric control system (65) of the drop plastic machine (60), when the backing material is sprayed onto a back surface of the semi-finished plastic flooring (10'), and delivering the semi-finished plastic flooring (10') to a predetermined position, wherein a material feeder (632) of at least one molding mechanism (63) of the drop plastic machine (60) sprays the backing material to the bottom (112) of the substrate (11), the backing material is arranged in a sheet shape or multiple strap shape, and the backing material is adhered on the bottom (112) of the substrate (11) after being solidified, thus obtaining the semi-finished plastic flooring (10') having a backing (14); and
(H) cutting, wherein the semi-finished plastic flooring (10') having the backing (14) is removed and is cut into a desired size, thus producing the plastic flooring (10).

2. The method as claimed in claim 1, **characterized in that** the pressing machine (50) is a five-roller pressing machine, and the pressing machine (50) includes the pedestal (57);
wherein the thickness rolling set (51) has two rollers fixed beside a first side of the contact rolling set (52), and a contacting position of the two thickness rollers aligns with an outlet of an extruder (20) so as to limit a thickness of the substrate (11);
wherein the contact rolling set (52) has the contacting roller (54), multiple guiding rollers arranged around the contacting roller (54);
wherein the press rolling set (53) is mounted beside a second side of the contact rolling set (52), and the press rolling set (53) has two opposite pressing rollers configured to roll and press the substrate (11), the printing layer (12), and the anti-abrasion layer (13) together, wherein one of the two opposite pressing rollers has embossing section (56) formed thereon so that the anti-abrasion layer (13) has distinguished pressing patterns after pressing the substrate (11), the printing layer (12), and the anti-abrasion layer (13).

3. The method as claimed in claim 1, **characterized in that** the delivery mechanism (62) of the drop plastic machine (60) is a delivery belt, and the least one molding mechanism (63) is located above the base (61) and opposite to the delivery mechanism (62), wherein the at least one molding mechanism (63) has a material collector (631) and the at least one material feeder (632) mounted on a bottom of the material collector (631).

4. The method as claimed in claim 1, **characterized in that** the backing (14) is made of polyvinyl chloride (PVC) or polyurethane (PU)

5. The method as claimed in claim 1, **characterized in that** the at least one molding mechanism (63) sprays the backing material onto the semi-finished plastic flooring (10') in a high pressure and a high temperature, the semi-finished plastic flooring (10') is cooled in a normal temperature.

## Patentansprüche

1. - Verfahren zum Herstellen eines Kunststoffbodenbelags, umfassend folgende Schritte:
(A) Bereitstellen und Zuführen eines Substrats (11) zu einer Pressmaschine (50);
(B) Bereitstellen und Zuführen einer Druckschicht (12) zu der Pressmaschine (50);
(C) Bereitstellen und Zuführen einer Abriebschutzschicht (13) zu der Pressmaschine (50);
(D) Extrusionsformen des Substrats (11), wobei das Substrat (11) durch einen Extruder (20) extrusionsgeformt wird und das Substrat (11) auf die Pressmaschine (50) transportiert wird; ein Ende der Druckschicht (12) auf einem ersten Walzmechanismus (30) befestigt wird und die Druckschicht (12) zu der Pressmaschine (50) zugeführt wird; ein Ende der Abriebschutzschicht (13) auf einem zweiten Walzmechanismus (40) montiert wird, und die Abriebschutzschicht (13) zu der Pressmaschine (50) zugeführt wird;
wobei die Pressmaschine (50) einen Sockel (57) beinhaltet, auf dem ein Stärkewalzensatz (51), ein Kontaktwalzensatz (52) und ein Presswalzensatz (53) angeordnet sind; das Substrat (11) zu dem Stärkewalzensatz (51) und einer Kontaktwalze (54) des Kontaktwalzensatzes (52) transportiert wird, die Druckschicht (12) durch eine erste Führungswalze (521) des Kontaktwalzensatzes (52) zu der Kontaktwalze (54) geführt wird und mit einer Oberseite (111) des Substrats (11) in Kontakt kommt;
wobei die Abriebschutzschicht (13) durch eine der mehreren Führungswalzen, die um die Kontaktwalze (54) des Kontaktwalzensatzes (52) angeordneten zur Kontaktwalze (54) geführt wird und mit der Druckschicht (12) in Kontakt kommt ;
wobei nach dem Kontakt zwischen dem Substrat (11), der Druckschicht (12) und der Abriebschutzschicht (13) diese durch die Pressmaschine (50) zusammengepresst werden, um einen halbfertigen Kunststoffbodenbelag (10') zu bilden;
(F) Bewegen und Positionieren des halbfertigen Kunststoffbodenbelags (10'), wobei eine Unterseite (112) des Substrats (11) nach oben weist;
(G) Einstellen einer Verteilungsform, einer Position und einer Größe eines Trägermaterials, das mittels eines elektrischen Steuersystems (65) der Tropfkunststoffmaschine (60) aufgesprüht wird, wenn das Trägermaterial auf eine Rückseite des halbfertigen Kunststoffbodenbelags (10') aufgesprüht wird, und Zuführen des halbfertigen Kunststoffbodenbelags (10') zu einer vorbestimmten Position, wobei ein Materialförderer (632) von mindestens einem Formungsmechanismus (63) der Tropfkunststoffmaschine (60) das Trägermaterial auf die Unterseite (112) des Substrats (11) sprüht, das Trägermaterial in einer Folienform oder Mehrfachbandform angeordnet ist und das Trägermaterial an der Unterseite (112) des Substrats (11) anhaftet, nachdem es sich verfestigt hat, wodurch der halbfertige Kunststoffbodenbelag (10') mit einem Träger (14) erlangt wird; und
(H) Schneiden, wobei der halbfertige Kunststoffbodenbelag (10') mit dem Träger (14) entfernt und auf eine gewünschte Größe zugeschnitten wird, wodurch der Kunststoffbodenbelag (10) hergestellt wird.

2. - Verfahren nach Anspruch 1, **dadurch gekennzeichnet, dass** die Pressmaschine (50) eine Fünf-Walzen-Pressmaschine ist und dass die Pressmaschine (50) den Sockel (57) beinhaltet;
wobei der Stärkewalzensatz (51) zwei Walzen aufweist, die neben einer ersten Seite des Kontaktwalzsatzes (52) befestigt sind, und eine Kontaktposition der zwei Stärkewalzen mit einem Auslass eines Extruders (20) ausgerichtet ist, um eine Stärke des Substrats (11) zu begrenzen;
wobei der Kontaktwalzsatz (52) die Kontaktwalze (54) und mehrere um die Kontaktwalze (54) herum angeordnete Führungsrollen aufweist;
wobei der Presswalzensatz (53) neben einer zweiten Seite des Kontaktwalzensatzes (52) montiert ist und der Presswalzensatz (53) zwei gegenüberliegende Presswalzen aufweist, die konfiguriert sind, um das Substrat (11), die Druckschicht (12) und die Abriebschutzschicht (13) zusammen zu walzen und zu pressen, wobei eine der zwei gegenüberliegenden Presswalzen einen darauf gebildeten Prägeabschnitt (56) aufweist, sodass die Abriebschutzschicht (13) nach dem Pressen des Substrats (11), der Druckschicht (12) und der Abriebschutzschicht (13) unterschiedliche Pressmuster aufweist.

3. - Verfahren nach Anspruch 1, **dadurch gekennzeichnet, dass** der Zufuhrmechanismus (62) der Tropfkunststoffmaschine (60) ein Förderband ist und der mindestens eine Formungsmechanismus (63) oberhalb der Basis (61) und gegenüber dem Fördermechanismus (62) angeordnet ist, wobei der mindestens eine Formungsmechanismus (63) einen Materialsammler (631) und den mindestens einen Materialförderer (632) aufweist, der an einem Boden des Materialsammlers (631) montiert ist.

4. - Verfahren nach Anspruch 1, **dadurch gekennzeichnet, dass** der Träger (14) aus Polyvinylchlorid (PVC) oder Polyurethan (PU) gefertigt ist.

5. - Verfahren nach Anspruch 1, **dadurch gekennzeichnet, dass** der mindestens eine Formungsmechanismus (63) das Trägermaterial mit hohem Druck und hoher Temperatur auf den halbfertigen Kunststoffbodenbelag (10') sprüht und der halbfertige Kunststoffbodenbelag (10') bei normaler Temperatur abgekühlt wird.

## Revendications

1. - Procédé de fabrication d'un revêtement de sol en matière plastique comprenant les suivantes :
(A) disposer et distribuer un substrat (11) à une machine de pressage (50) ;
(B) disposer et distribuer une couche d'impression (12) à la machine de pressage (50) ;
(C) disposer et distribuer une couche anti-abrasion (13) à la machine de pressage (50) ;
(D) mouler par extrusion le substrat (11), le substrat (11) étant moulé par extrusion par une extrudeuse (20), et le substrat (11) étant transporté sur la machine de pressage (50) ; une extrémité de la couche d'impression (12) étant fixée sur un premier mécanisme de roulement (30), et la couche d'impression (12) étant distribuée sur la machine de pressage (50) ; une extrémité de la couche anti-abrasion (13) étant montée sur un second mécanisme de roulement (40), et la couche anti-abrasion (13) étant distribuée sur la machine de pressage (50) ;
la machine de pressage (50) comprenant un socle (57) sur lequel un ensemble de laminage d'épaisseur (51), un ensemble de laminage et contact (52) et un ensemble de laminage et pressage (53) sont disposés ; le substrat (11) étant transporté jusqu'à l'ensemble de laminage d'épaisseur (51) et un rouleau de contact (54) de l'ensemble de laminage et contact (52), la couche d'impression (12) étant guidée jusqu'au rouleau de contact (54) par un premier rouleau de guidage (521) de l'ensemble de laminage et contact (52) et pour entrer en contact avec une partie supérieure (111) du substrat (11) ;
la couche anti-abrasion (13) étant guidée jusqu'au rouleau de contact (54) par l'un des multiples rouleaux de guidage disposés autour du rouleau de contact (54) de l'ensemble de laminage et contact (52) et pour entrer en contact avec la couche d'impression (12) ;
dans lequel une fois que le substrat (11), la couche d'impression (12) et la couche anti-abrasion (13) sont en contact, ils sont pressés ensemble par la machine de pressage (50) de façon à former un revêtement de sol en matière plastique semi-fini (10') ;
(F) déplacer et positionner le revêtement de sol en matière plastique semi-fini (10') de façon à orienter une partie inférieure (112) du substrat (11) vers le haut ;
(G) régler une forme de distribution, une position et une taille d'un matériau d'envers pulvérisé au moyen d'un système de commande électrique (65) de la machine de dépôt de matière plastique (60), lorsque le matériau d'envers est pulvérisé sur une surface arrière du revêtement de sol en matière plastique semi-fini (10'), et distribuer le revêtement de sol en matière plastique semi-fini (10') à une position prédéterminée, un chargeur de matériau (632) d'au moins un mécanisme de moulage (63) de la machine de dépôt de matière plastique (60) pulvérisant le matériau d'envers sur la partie inférieure (112) du substrat (11), le matériau d'envers étant disposé sous une forme de feuille ou une forme de multiples bandes, et le matériau d'envers étant amené à adhérer sur la partie inférieure (112) du substrat (11) après avoir été amené à solidifier, obtenant ainsi le revêtement de sol en matière plastique semi-fini (10') ayant un envers (14) ; et
(H) découper, le revêtement de sol en matière plastique semi-fini (10') ayant l'envers (14) étant retiré et découpé à une taille souhaitée, produisant ainsi le revêtement de sol en matière plastique (10).

2. - Procédé selon la revendication 1, **caractérisé par le fait que** la machine de pressage (50) est une machine de pressage à cinq rouleaux et que la machine de pressage (50) comprend le socle (57) ;
dans lequel l'ensemble de laminage d'épaisseur (51) a deux rouleaux fixés à côté d'un premier côté de l'ensemble de laminage et contact (52), et une position de contact des deux rouleaux d'épaisseur s'aligne sur une sortie d'une extrudeuse (20) de façon à limiter une épaisseur du substrat (11) ;
dans lequel l'ensemble de laminage et contact (52) a le rouleau de contact (54) et de multiples rouleaux de guidage disposés autour du rouleau de contact (54) ;
dans lequel l'ensemble de laminage et pressage (53) est monté à côté d'un second côté de l'ensemble de laminage et contact (52), et l'ensemble de laminage et pressage (53) a deux rouleaux de pressage opposés configurés pour laminer et presser le substrat (11), la couche d'impression (12) et la couche anti-abrasion (13) ensemble, l'un des deux rouleaux de pressage opposés ayant une section de gaufrage (56) formée sur celui-ci, de telle sorte que la couche anti-abrasion (13) a des motifs de pressage distincts après pressage du substrat (11), de la couche d'impression (12) et de la couche anti-abrasion (13).

3. - Procédé selon la revendication 1, **caractérisé par le fait que** le mécanisme de distribution (62) de la machine de dépôt de matière plastique (60) est une courroie de distribution, et l'au moins un mécanisme de moulage (63) est situé au-dessus de la base (61) et en regard du mécanisme de distribution (62), l'au moins un mécanisme de moulage (63) ayant un collecteur de matériau (631) et l'au moins un chargeur de matériau (632) monté sur une partie inférieure du collecteur de matériau (631).

4. - Procédé selon la revendication 1, **caractérisé par le fait que** l'envers (14) est fait de polychlorure de vinyle (PVC) ou de polyuréthane (PU).

5. - Procédé selon la revendication 1, **caractérisé par le fait que** l'au moins un mécanisme de moulage (63) pulvérise le matériau d'envers sur le revêtement de sol en matière plastique semi-fini (10') à haute pression et haute température, le revêtement de sol en matière plastique semi-fini (10') étant refroidi à une température normale.
